## Europäisches Patentamt
## European Patent Office
## Office européen des brevets

(19)

(11) Veröffentlichungsnummer: **0 125 418**
**B1**

(12)

# EUROPÄISCHE PATENTSCHRIFT

(45) Veröffentlichungstag der Patentschrift:
**15.10.86**

(51) Int. Cl.⁴: **C 01 B 33/159,** C 09 C 1/30

(21) Anmeldenummer: **84102720.4**

(22) Anmeldetag: **13.03.84**

(54) **Verfahren zur Herstellung von Fällungskieselsäure.**

(30) Priorität: **15.03.83 DE 3309272**

(43) Veröffentlichungstag der Anmeldung:
**21.11.84 Patentblatt 84/47**

(45) Bekanntmachung des Hinweises auf die Patenterteilung:
**15.10.86 Patentblatt 86/42**

(84) Benannte Vertragsstaaten:
**BE DE FR GB IT NL**

(56) Entgegenhaltungen:
**DE-A-2 729 244**
**DE-C-1 172 245**
**US-A-2 802 850**
**US-A-2 891 875**

(73) Patentinhaber: **Consortium für elektrochemische Industrie GmbH, Zielstattstrasse 20, D-8000 München 70 (DE)**

(72) Erfinder: **Dressnandt, Günter, Dr. Dipl.- Chem., Kufsteiner Platz 3/V, D-8000 München 80 (DE)**
Erfinder: **Katzer, Hans, Dr. Dipl.- Chem., Anwanden 11, D-8969 Kempten (DE)**
Erfinder: **Kratel, Günter, Dr. Dipl.- Chem., Alpenblickstrasse 10, D-8963 Durach- Bechen (DE)**
Erfinder: **Aulbach, Hans, Zillertalstrasse 55, D-8000 München 70 (DE)**
Erfinder: **Lotz, Joachim, Klingerstrasse 44, D-8000 München 70 (DE)**

EP 0 125 418 B1

### Beschreibung

Die Erfindung betrifft die Herstellung elektrolytarmer, hydrophobierter Fällungskieselsäure durch Fällung wäßriger Natriumsilikatlösungen mit Schwefelsäure unter Verwendung von Dimethylpolysiloxan als Hydrophobiermittel.

Es ist gemäß DE-A- 27 29 244 bereits bekannt, hydrophobierte Fällungskieselsäure durch Fällung von Wasserglas mit Schwefelsäure dadurch herzustellen daß eine Fällungssuspension durch Fällen von Wasserglas mit konzentrierter Schwefelsäure bereitet wird, dieser Suspension ein Hydrophobiermittel auf Basis von Organosiliciumverbindungen zugegeben wird und die derart hydrophobierte Kieselsäure schließlich abgetrennt, getrocknet und bei 200 bis 400 °C getempert wird. Nachteiligerweise enthält die so gewonnene Fällungskieselsäure noch erhebliche Mengen an Elektrolyten (z.B. $Na_2SO_4$). Außerdem muß sie noch einem intensiven Mahlvorgang unterworfen werden.

Es ist ferner gemäß US-A-2 891 875 bereits bekannt, Fällungskieselsäure dadurch herzustellen, daß eine Emulsion von Dimethylpolysiloxan in Wasserglaslösung bereitet wird und anschließend die Kieselsäure durch Zugabe von Erdalkali- oder Aluminiumchlorid gefällt wird. Nachteiligerweise enthält die so gewonnene Fällungskieselsäure auch nach einem zusätzlichen Reinigungsschritt ebenfalls noch erhebliche Mengen an Elektrolyten.

Aufgabe der Erfindung war es ein Verfahren zur Herstellung elektrolytarmer, hydrophobierter Kieselsäure zu entwickeln. Weiterhin war es Aufgabe der Erfindung, solche elektrolytarme, hydrophobierte Kieselsäure herzustellen, die als Füllstoff für Organopolysiloxanmassen, insbesondere auch für solche Massen, die zur Ummantelung elektrischer Leitungen verwendet werden, geeignet ist.

Gelöst wird diese Aufgabe durch ein Verfahren zur Herstellung von elektrolytarmer, hydrophobierter Fällungskieselsäure durch Fällung wäßriger Natriumsilikatlösungen mit Schwefelsäure unter Verwendung von Dimethylpolysiloxan als Hydrophobiermittel, das dadurch gekennzeichnet ist, daß

a) eine wäßrige Emulsion von Dimethylpolysiloxan mit einem Siloxangehalt von zweckmäßigerweise 1,5 bis 3 Gewichts-%, bezogen auf das Gesamtgewicht der Emulsion bereitet wird,

b) 10 bis 30 Gewichts-%-ige wäßrige Natriumsilikatlösung und 1 n bis 2 n Schwefelsäure gleichzeitig derart in die Emulsion gemäß a) eingetragen werden, daß der pH-Wert des Reaktionsgemisches im Bereich von 6,5 bis 8,5 liegt und die Temperatur des Reaktionsgemisches 60 bis 80 °C beträgt und

c) die vorgetrocknete Fällungskieselsäure auf eine Temperatur von 250 bis 300 °C erhitzt wird.

Die Dimethylpolysiloxan-Emulsion wird durch heftiges Rühren eines Dimethylpolysiloxan/Wasser-Gemisches, gegebenenfalls unter Zugabe von Wasserglaslösung, bereitet.

Vorzugsweise wird in den endständigen Einheiten je eine Trimethylsiloxigruppe aufweisendes oder eine Si-gebundene OH-Gruppe aufweisendes Dimethylpolysiloxan verwendet, das insbesondere eine Viskosität von 100 bis 500 mPa.s besitzt.

Der Siloxangehalt der Emulsion beträgt zweckmäßigerweise 1,5 bis 3 Gew.%, bezogen auf das Gesamtgewicht der Emulsion. Alternativ kann auch eine durch Emulsionspolymerisation gewonnene Dimethylpolysiloxanemulsion verwendet werden.

Als Hilfsstoffe können in der Emulsion weiterhin Emulgatoren z.B. ein 1: 1 Mischpolymerisat aus Polyethylen/Polypropylen vom Molekulargewicht 3000 bis 4000 und/oder kleinere Mengen an Natriumsilikat in der Emulsion enthalten sein. Der Anteil dieser Hilfsstoffe beträgt 0 bis etwa 1 Gew.%, bezogen auf das Gesamtgewicht der Emulsion.

Die Menge an Emulsion wird so bemessen, daß Dimethylpolysiloxan in einer Menge von 15 bis 20 Gew.%, bezogen auf das Gesamtgewicht der erfindungsgemäß herzustellenden, getrockneten (Restfeuchte ca. 1 bis 2 Gew.%), hydrophobierten Fällungskieselsäure, vorliegt.

Die Temperatur der als Vorlage dienenden Emulsion beträgt, auch während des gesamten Fällungsvorganges, 60 bis 80° C, insbesondere 70 bis 80 °C.

Die Herstellung der erfindungsgemäßen Fällungskieselsäure erfolgt nun durch gleichzeitiges Zudosieren einer 10 bis 30 Gew.%-igen, wäßrigen Natriumsilikatlösung (Wasserglaslösung) mit einem bevorzugten analytischen Gewichtsverhältnis von $SiO_2$: $Na_2O$ von 2,5: 1 bis 4: 1 und einer 1 n bis 2 n Schwefelsäure in die Emulsion unter Rühren. Der pH-Wert beträgt dabei während des eigentlichen Fällungsvorganges 6,5 bis 8,5. Nach Beendigung der Fällung wird noch zweckmäßigerweise einige Zeit weitergerührt und der pH-Wert der Fällungssuspension auf einen Wert von 6,0 bis 6,5 gebracht.

Die anfallende Fällungssuspension ist gut filtrierbar. Sie wird noch mit ca. 40 bis 60 °C heißem Wasser gewaschen, bis der Leitfähigkeitswert des Fitlratwassers etwa 20 μS beträgt.

Danach wird der Filterkuchen, der noch ca. 80 Gew.% Wasser enthält, bei Temperaturen von 120 bis 160 °C bis zur Gewichtskonstanz getrocknet. Die Restfeuchte beträgt hierbei noch ca. 1 bis 2 Gew.%. Schließlich wird das getrocknete Produkt noch auf eine Temperatur von 250 bis 300 °C erhitzt.

Es wird eine elektrolytarme, hydrophobierte Fällungskieselsäure mit einem Organopolysiloxangehalt von 15 bis 18 Gew.% erhalten. Das feinpulvrige Produkt ist farblos, röntgenamorph, besitzt eine spezifische Oberfläche von 90 +- 30 m2/g und muß im allgemeinen nicht gemahlen werden. Der Na₂SO₄-Gehalt beträgt ⩽ 0,05 Gew.%.

Die erfindungsgemäß hergestellte Fällungskieselsäure findet z.B. Verwendung als Füllstoff für Polymermassen insbesondere für Organopolysiloxanmassen. Bei der Verarbeitung derart abgemischter Massen kommt es nicht, wie oftmals bei Organopolysiloxanmassen, die in größeren Mengen pyrogenerzeugte Kieselsäuren enthalten zu Verstrammungseffekten bei der Extrusion. Nachdem die erfindungsgemäß hergestellte Fällungskieselsäure ferner sehr niedrige Elektrolytgehalte aufweist, ist sie insbesondere als Füllstoff für Kabelummantelungsmassen auf Basis von Organopolysiloxan geeignet. Sie ist somit nicht nur ein kostengünstigerer Ersatz für pyrogenerzeugte Kieselsäuretypen, sondern besitzt darüberhinaus noch Vorteile bei der Verarbeitung.

Die Erfindung wird nun anhand von Beispielen näher erläutert:

| | | |
|---|---|---|
| BET-Oberfläche nach DIN 66 131 | m²/g | 104 |
| Mittlere Größe der Primärteilchen aus EM-Aufnahmen | nm | 18 |
| Trocknungsverlust nach DIN 55 921 nach 2 Std. bei 105 °C | % | 1,35 |
| Schüttgewicht, ungepreßt | g/l | 94 |
| pH-Wert (in 4 %-iger wäßrig-methanolischer Dispersion) | | 8,5 |
| Leitfähigkeit (in 4 %-iger wäßrig-methanolischer Dispersion) | µS | 27 |
| Na₂SO₄-Gehalt (bezogen auf die 2 Std. bei 105°C getrocknete Substanz) | Gew.% | 0,01 |
| Wasseraufnahme bei 30°C und 70 % Raumfeuchte nach 15 Std. | Gew.% | 1,54 |

**Beispiel 2**

Es wurde eine durch Peroxid vernetzte Dimethylpolysiloxanmasse (HTV-Masse mit 99,9 Gew.% Dimethylsiloxieinheiten) mit einem Füllstoffgehalt von 35 Gew.% an

**Beispiel 1**

In einem 20 l-Behälter wurden 8 l Wasser sowie 100 ml einer 25 Gew.%-igen wäßrigen Wasserglaslösung (Gewichtsverhältnis SiO₂: Na₂O = 3,75: 1) vorgelegt. In diese Lösung wurden unter heftigem Rühren 200 g eines in den endständigen Einheiten je eine Trimethylsiloxigruppe aufweisenden Dimethylpolysiloxans der Viskosität 400 mPa.S eingetragen. Die so erhaltene Emulsion wurde mit einem Tauchsieder auf 75 °C erhitzt. Zu dieser Vorlage wurden nun gleichzeitig innerhalb von 80 Minuten 3,9 l einer 25 Gew.%-igen Wasserglaslösung (Gewichtsverhältnis SiO₂: Na₂o = 3,75: 1) und 4 l einer 1,7 n Schwefelsäure kontinuierlich zudosiert, wobei ein pH-Wert in der Vorlage von 7,0 bis 7,5 eingehalten wurde. Danach wurde noch 20 Minuten weitergerührt und schließlich noch so viel 1,7 n Schwefelsäure zugegeben bis der pH-Wert 6,4 betrug.

Die so erhaltene Fällungssuspension wurde abfiltriert und der Filterkuchen mit 50 °C warmem Wasser gewaschen bis die Leitfähigkeit des Filtratwassers 20 µS betrug. Der gewaschene Filterkuchen wurde anschließend bei 150 °C bis zur Gewichtskonstanz getrocknet. Schließlich wurde das Produkt noch 2 Stunden auf 300 °C erhitzt.

Die in 95 %-iger Ausbeute erhaltene Fällungskieselsäure wies folgende analytische Daten auf:

Fällungskieselsäure gemäß Beispiel 1 auf elektrische Eigenschaften untersucht.
Ergebnisse:

Tabelle

| | bei Raumtemperatur gelagerte Masse 23 °C | 7 Tage in heiß-wasser gelagerte Masse 95 °C |
|---|---|---|
| Spezifischer Durchgangs-widerstand nach DIN 53 482 in $\Omega$-cm | $1,9 \cdot 10^{15}$ | $3,5 \cdot 10^{13}$ |
| Dielektrizitätskonstante bei 50 Hz nach DIN 53 483 | $3,2$ | $3,0$ |
| Verlustfaktor tg ∘ bei 50 Hz nach DIN 53 483 | $7 \cdot 10^{-3}$ | $2,5 \cdot 10^{-2}$ |

**Patentansprüche**

1. Verfahren zur Herstellung von elektrolytarmer, hydrophobierter Fällungskieselsäure durch Fällung wäßriger Natriumsilikatlösungen mit Schwefelsäure unter Verwendung von Dimethylpolysiloxan als Hydrophobiermittel, dadurch gekennzeichnet, daß

a) eine wäßrige Emulsion von Dimethylpolysiloxan mit einem Siloxangehalt von zweckmäßigerweise 1,5 bis 3 Gewichts-%, bezogen auf das Gesamtgewicht der Emulsion, bereitet wird,

b) 10 bis 30 Gewichts-%-ige, wäßrige Natriumsilikatlösung und 1 n bis 2 n Schwefelsäure gleichzeitig derart in die Emulsion gemäß a) eingetragen werden, daß der pH-Wert des Reaktionsgemisches im Bereich von 6,5 bis 8,5 liegt und die Temperatur des Reaktionsgemisches 60 bis 80 °C beträgt und

c) die vorgetrocknete Fällungskieselsäure auf eine Temperatur von 250 bis 300 °C erhitzt wird.

2. Verwendung der gemäß Anspruch 1 hergestellten Fällungskieselsäure als Füllstoff für Kabelummantelungsmassen.

**Claims**

1. Process for the manufacture of precipitated silica that has a low electrolyte content and has been rendered hydrophobic, by precipitating an aqueous sodium silicate solution with sulphuric acid using a dimethylpolysiloxane as the agent imparting the hydrophobic property, characterised in that

a) an aqueous emulsion of a dimethylpolysiloxane having a siloxane content of, advantageously, from 1.5 to 3% by weight, calculated on the total weight of the emulsion, is prepared,

b) a 10 to 30% by weight aqueous sodium silicate solution and from 1N to 2N sulphuric acid are incorporated simultaneously into the emulsion according to a) in such a manner that the pH of the reaction mixture is in the range of from 6.5 to 8.5 and the temperature of the reaction mixture is from 60 to 80°C and

c) the pre-dried precipitated silica is heated to a temperature of from 250 to 300°C.

2. Use of the precipitated silica manufactured according to claim 1 as a filler for cable-covering compositions.

**Revendications**

1. Procédé pour la préparation de silice hydrofugée à faible teneur en électrolytes, par précipitation de solutions aqueuses de silicate de sodium avec de l'acide sulfurique en utilisant comme agent d'hydrofugation du polydiméthylsiloxane, caractérisé en ce que

a) on prépare une émulsion aqueuse de polydiméthylsiloxane ayant une teneur en siloxane avantageusement comprise entre 1,5 et 3 % en poids, par rapport au poids total de l'émulsion,

b) on introduit dans l'émulsion selon a) simultanément 10 à 30 % en poids d'une solution aqueuse de silicate de sodium et de l'acide sulfurique 1 N à 2 N, de telle sorte que le pH du mélange réactionnel soit dans l'intervalle de 6,5 à 8,5 et que la température du mélange réactionnel soit de 60 à 80°C, et

c) on chauffe à une température de 250 à 300°C la silice précipitée préséchée.

2. Utilisation de la silice précipitée préparée selon la revendication 1 en tant que charge pour matières de gainage de câbles.